Europäisches Patentamt

European Patent Office

Office européen des brevets

(19)

(11) Publication number: **0 046 740**
**A2**

(12) # EUROPEAN PATENT APPLICATION

(21) Application number: **81850137.1**

(22) Date of filing: **20.08.81**

(51) Int. Cl.³: **B 01 D 46/42**
**G 01 N 15/08**

(30) Priority: **21.08.80 SE 8005872**

(43) Date of publication of application:
**03.03.82 Bulletin 82/9**

(84) Designated Contracting States:
**AT BE CH DE FR GB IT LI NL SE**

(71) Applicant: **CAMFIL AB**
**Industrigatan 3**
**S-150 13 Trosa(SE)**

(72) Inventor: **Gustavsson, Jan**
**Industrigatan 3**
**S-150 13 Trosa(SE)**

(74) Representative: **Onn, Thorsten et al,**
**AB STOCKHOLMS PATENTBYRA Box 3129**
**S-103 62 Stockholm(SE)**

(54) **A method and device for testing filters.**

(57) A method and a device for measuring the separation
ability of filters comprising measurement of the particle
concentration before and after the filter via a particle counter
(17).

FIG.1

EP 0 046 740 A2

## A method and a device for testing filters

In connection with World War II a need of highly effective air filters appeared, especially as a protection against radioactive particles. These so-called absolute filters have a separation degree of at least 99.97% and have after their discovery got further applications than as air filters for shelters. In order to test if these absolute filters manage the intended separation degree some different test methods have been found. The separation degree of the filters having a particle size of 0.3 µm, which is considered the most difficult one for the filters, is e.g. tested with the "DOP" test method. There are several other methods for testing absolute filters and filters with lower separation degrees and these test methods include flame photometry, light scattering, discoloration, radiation, fluoroscence etc. and have unfortunately the disadvantage that they are restricted to a certain filter quality or separation ability. Moreover, all filter tests known so far have the disadvantage that they cannot be carried out on a filter in use or directly on the spot but all require laboratory conditions.

It is therefore the object of the invention to provide a test method for filters which can be utilized in laboratories as well as on filters mounted on their places of use, and moreover, the test method must be nondestroying in order that one should be able to test regularly a filter inserted for one purpose or another.

According to the invention this object is achieved in such a way that the particle concentration is measured before and after a filter by means of a particle counter which may include a laser. You can either measure on a special particle supplied from a particle generator to the room before the filter or, alternatively, measurement can of course be carried out with the particles normally supplied to filters. Furthermore, it is also possible only to utilize a particle counter which alternately collects samples from the room before and after the filter, respectively. However, at very qualified filters the particle counter may fail, and therefore it may be necessary to dilute the particle concentration before measurement with air free of particles before the sample is supplied to the particle counter.

The so far very long testing times amounting to several hours and sometimes several days may be replaced by means of the invention with almost instantaneous measurements at the same time as information and accuracy can be increased to a large degree, and, not the least, a filter in operation can be checked very easily even without being taken out of operation. Moreover, it is possible at installation of a filter to establish very quickly leaks in filters or frame systems.

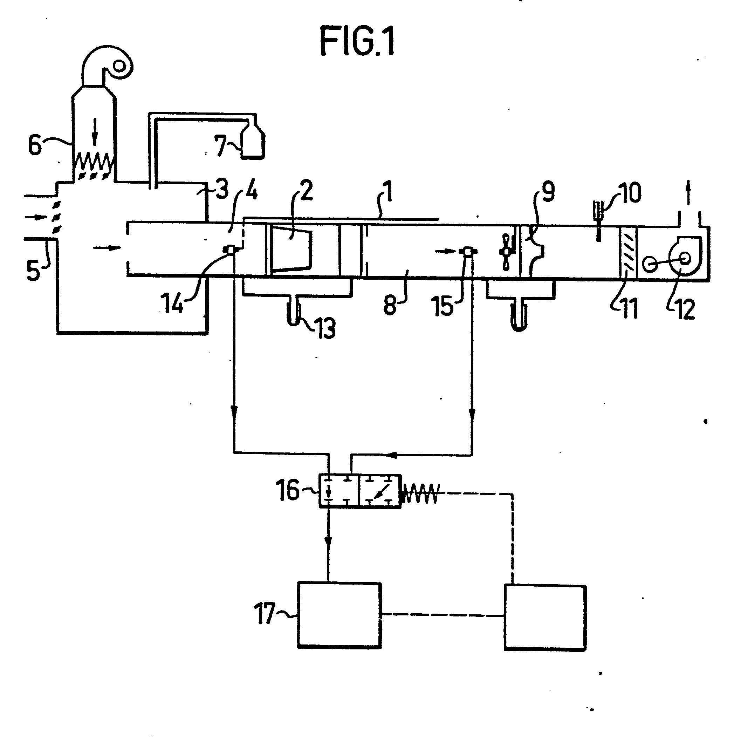

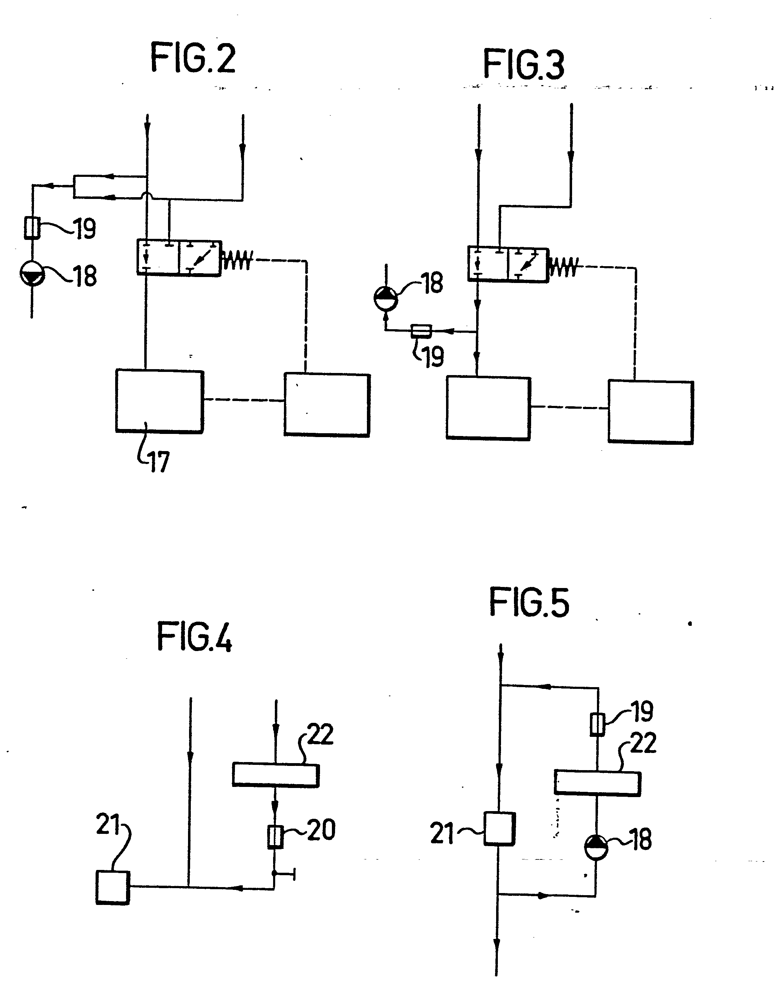

Additional advantages of the invention appear from the following illustrative example in connection with the drawings. Fig. 1 shows complete laboratory arrangement for testing in accordance with the invention while Figs. 2-5 show alternative methods for connecting the measuring equipment.

The device shown in Fig. 1 comprises a test channel 1 in which a filter 2 to be tested has been placed. Before the filter a compensation chamber (4) is arranged to which air mixed with particles from a supply chamber 3 for air has been added. Outdoor air can be supplied to the chamber through an opening 5 as well as absolutely filtered air from an opening in which an absolute filter has been placed, and moreover particle generators 7 of various types can be connected to the chamber 3. After the test filter in the direction of flow a compensation chamber (8) and a throttling or measuring nozzle 9 is arranged so as to provide a measure of the passing air flow via the pressure difference on both sides. Furthermore, a thermometer 10, a filter 11 and a suction fan 12 are arranged in the channel 1. On both sides of the tested filter 2 there is arranged a measuring means 13 for pressure difference as well as measuring probes for the particle counter. Of these measuring probes 14 and 15, respectively, one (14) is arranged before the test filter and, one (15) after the test filter in the direction of flow, and the probes are connected via a magnet valve 15 to a particle counter 17 of laser type, a control equipment or computer being connected to the particle counter and the magnet valve, said control equipment or computer also including means for representation of resulting measuring data, e.g. a screen or writer. Of course this control means can also be connected to the other measuring means as well as the fans for controlling the passing flows and other test parameters.

In the embodiment shown in Fig. 1 the particle counter 17 is measuring via the magnet valve 16 alternately the particle presence before and after the test filter, respectively. However, if the connections to the measuring probes 14 and 15, respectively, should be too long an arrangement similar to that in Fig. 2 should be suitable, where a pump 18 is continuously sucking air and particles through the pipes of the measuring probes, after which the magnet valve is connected via short lines. In series with the pump 18 there is connected a flow meter 19 to make it possible to control that the flow amounts from the measuring probes will be correct.

Moreover, in Fig. 3 it is shown how the pump and the flow meter have been placed after the magnet valve in order that it should be still easier to suck the volume to be measured by means of the particle counter.

If the test filter is to be tested for a very high particle concentration this concentration may be so great that the particle counter cannot manage measuring. It may then be necessary to utilize the connection outlined in Fig. 4, i.e. before the test flow with the high particle concentration is supplied to the particle counter 21 it is mixed with absolutely clean air, which has been taken through an absolute filter 22. In this way it is possible to record or control the dilution ratio by means of an additional flow meter 20.

For the same purpose the device according to Fig. 5 is also possible, where some air can be recirculated via an absolute filter, a flow meter 19 and a pump 18 so that the drained concentration will be lower and consequently possible to measure for the particle counter 21. However, it should be seen to it before the particle counting that the air can

**0046740**

distribute the particles satisfactorily in some form of mixing chamber in connection with the particle counter 21.

Patent Claims

1.    A method for measuring the separation degree of filters, characterized in that the particle concentration before the filter and after the filter, respectively, is measured alternately in the direction of flow by means of a common particle counter before and after the filter, respectively, and that the values obtained are utilized for calculation of the separation degree.

2.    A device for carrying out the method according to claim 1, characterized in that it is provided with a particle counter for measuring the concentration of particles before and after the test filter, respectively.

3.    The device of claim 2, characterized in that it comprises a particle counter which can be connected via a valve or valves either to a measuring probe placed before the filter in the direction of flow or to a measuring probe placed after the filter in the direction of flow.

4.    The device of claim 2 or 3, characterized in that before the particle counter additional and cleaner air is supplied to the flow from the room before the filter for dilution of the sample in order that the particle counter should be able to operate when the particle concentration exceeds its capacity.

5.    The device of claim 2 or 4, characterized in that a recirculation circuit comprising a filter and an air pump. is connected parallelly to the connection of the particle counter to the room before the test filter for dilution of the particle concentration.

6.    The device of any one of claim 2-5, characterized in that the plant is computerized.

FIG.1

FIG.2

FIG.3

19

18

17

18

19

FIG.4

FIG.5

22

21

20

19

22

21

18